# EUROPEAN PATENT APPLICATION

(11) **EP 4 654 461 A1**
(43) Date of publication of application: **26.11.2025**
(21) Application number: 23923705.0
(22) Date of filing: 09.10.2023
(51) Int. Cl.: H02P 27/04, H02P 27/08

(54) **MOTOR CONTROLLER, POWERTRAIN, AND ELECTRIC VEHICLE**

(30) Priority: 20.02.2023 CN 202310193184
(71) Applicant: Huawei Digital Power Technologies Co., Ltd., Shenzhen, Guangdong 518043 (CN)
(72) Inventor: LI, Ying, Shenzhen, Guangdong 518043 (CN)
(74) Representative: Gill Jennings & Every LLP
(86) International application number: PCT/CN2023/123618
(87) International publication number: WO 2024/174540

(57) **Abstract**

This application provides a motor control unit, including a control apparatus and three switching bridge arms. The control apparatus is configured to: based on at least one of a result of comparison between a rotational speed of a motor and a preset rotational speed and a result of comparison between a temperature of the motor control unit and a preset temperature, adjust switching frequencies of upper bridge arm switching transistors and lower bridge arm switching transistors of the three switching bridge arms, and/or switch a type of a control signal. This application further provides a powertrain and an electric vehicle. Therefore, the motor control unit, the powertrain, and the electric vehicle provided in this application can optimize a balance between NVH performance of the powertrain and the temperature of the motor control unit.

## Description

### CROSS-REFERENCE TO RELATED APPLICATIONS

This application claims priority to Chinese Patent Application No. 202310193184.7, filed with the China National Intellectual Property Administration on February 20, 2023 and entitled "MOTOR CONTROL UNIT, POWERTRAIN, AND ELECTRIC VEHICLE", which is incorporated herein by reference in its entirety.

### TECHNICAL FIELD

This application relates to the field of motor technologies, and in particular, to a motor control unit, a powertrain, and an electric vehicle.

### BACKGROUND

A powertrain (Powertrain) of an electric vehicle generally includes a motor and a motor control unit. The motor control unit usually controls turn-on or turn-off of a plurality of power switching transistors based on a pulse width modulation (Pulse Width Modulation, PWM) signal.

Turn-on and turn-off of the plurality of power switching transistors in the motor control unit cause a temperature rise of the motor control unit. Correspondingly, the motor control unit needs to reduce a frequency of the PWM signal, to reduce turn-on and turn-off frequencies of the power switching transistor, reduce heat generated by the power switching transistor, and avoid an excessively high temperature of the motor control unit. However, when the frequency of the PWM signal is reduced, a carrier of the PWM signal may resonate with an element in the powertrain, resulting in carrier noise that deteriorates noise, vibration, and harshness (Noise, Vibration, Harshness, NVH) performance of the powertrain.

In addition, an increase in a quantity of segments of sending the PWM signal also causes the temperature rise of the motor control unit. Correspondingly, the motor control unit needs to reduce the quantity of segments of sending the PWM signal, to reduce the heat generated by the power switching transistor, and avoid the excessively high temperature of the motor control unit. However, when the quantity of segments of sending the PWM signal is reduced, the carrier of the PWM signal may resonate with the element in the powertrain, resulting in the carrier noise that deteriorates the NVH performance of the powertrain.

### SUMMARY

In view of the foregoing problem, this application provides a motor control unit, a powertrain, and an electric vehicle, to adjust a mode of sending a PWM signal and a switching frequency of a power switching transistor, to reduce heat generated by the power switching transistor, so as to optimize NVH performance of the powertrain, and control a balance between the NVH performance of the powertrain and a temperature of the motor control unit.

According to a first aspect, this application provides a motor control unit, where the motor control unit includes a control apparatus and three switching bridge arms, two ends of each switching bridge arm are configured to receive an input voltage of the motor control unit, each switching bridge arm includes an upper bridge arm switching transistor and a lower bridge arm switching transistor, bridge arm midpoints of the three switching bridge arms are respectively configured to output three phases of alternating currents to three phases of windings of a motor, and the control apparatus is configured to: based on at least one of a result of comparison between a rotational speed of the motor and a preset rotational speed and a result of comparison between a temperature of the motor control unit and a preset temperature, adjust switching frequencies of the upper bridge arm switching transistors and the lower bridge arm switching transistors of the three switching bridge arms, and/or switch a type of a control signal. The control apparatus is configured to output at least two types of control signals, to control the upper bridge arm switching transistors and the lower bridge arm switching transistors of the three switching bridge arms. The at least two types of control signals include a first control signal and a second control signal. A quantity of segments of sending the first control signal is greater than a quantity of segments of sending the second control signal. The preset rotational speed includes a first preset rotational speed and a second preset rotational speed, and the second preset rotational speed is greater than the first preset rotational speed.

The control apparatus of the motor control unit provided in this embodiment of this application adjusts the switching frequencies of the upper bridge arm switching transistors and the lower bridge arm switching transistors of the three switching bridge arms, and/or switches the type of the control signal, to reduce a temperature rise of the motor control unit, and optimize NVH performance of the powertrain, so as to control a balance relationship between the NVH performance of the powertrain and the temperature of the motor control unit.

With reference to the first aspect, in a possible implementation, the control apparatus is configured to increase the switching frequencies of the upper bridge arm switching transistors and the lower bridge arm switching transistors of the three switching bridge arms in response to that the rotational speed of the motor is greater than or equal to the first preset rotational speed.

The control apparatus of the motor control unit provided in this embodiment of this application increases the switching frequency of the switching transistor of the switching bridge arm in response to that the rotational speed of the motor is greater than or equal to the first preset rotational speed, to reduce a possibility that a carrier of a PWM signal resonates with an element in the powertrain, so as to optimize NVH performance of the motor.

With reference to the first aspect, in a possible implementation, the control apparatus is configured to reduce the switching frequencies of the upper bridge arm switching transistors and the lower bridge arm switching transistors of the three switching bridge arms in response to that the rotational speed of the motor is greater than or equal to the second preset rotational speed.

The control apparatus of the motor control unit provided in this embodiment of this application reduces the switching frequency of the switching transistor of the switching bridge arm in response to that the rotational speed of the motor is greater than or equal to the second preset rotational speed, to reduce heat generated by the power switching transistor, and reduce the temperature rise of the motor control unit.

With reference to the first aspect, in a possible implementation, the at least two types of control signals output by the control apparatus of the motor control unit in this embodiment of this application include a first control signal and a second control signal, and a quantity of segments of sending the first control signal is greater than a quantity of segments of sending the second control signal. The control apparatus outputs the first control signal in response to that the rotational speed of the motor is less than the first preset rotational speed. The control apparatus outputs the second control signal in response to that the rotational speed of the motor is greater than or equal to the first preset rotational speed.

The control apparatus of the motor control unit provided in this embodiment of this application may switch the type of the control signal based on the rotational speed of the motor. The control apparatus outputs, based on the rotational speed of the motor, the first control signal with a large quantity of segments of sending the first control signal, to reduce the possibility that the carrier of the PWM signal resonates with the element in the powertrain, so as to improve the NVH performance of the powertrain. The control apparatus outputs, based on the rotational speed of the motor, the second control signal with a small quantity of segments of sending the second control signal, to reduce the heat generated by the power switching transistor, and reduce the temperature rise of the motor control unit accordingly.

With reference to the first aspect, in a possible implementation, the control apparatus is configured to output the first control signal in response to that the rotational speed of the motor is greater than or equal to the second preset rotational speed.

With reference to the first aspect, in a possible implementation, the control apparatus reduces the switching frequencies of the upper bridge arm switching transistors and the lower bridge arm switching transistors of the three switching bridge arms in response to that the temperature of the motor control unit is greater than or equal to the preset temperature.

The control apparatus of the motor control unit provided in this embodiment of this application can reduce the switching frequency of the switching transistor based on the temperature of the motor control unit, to reduce the heat generated by the power switching transistor, and reduce the temperature rise of the motor control unit.

With reference to the first aspect, in a possible implementation, the control apparatus is configured to: in response to that the temperature of the motor control unit is greater than or equal to the preset temperature and the rotational speed of the motor is less than the first preset rotational speed, output the first control signal, and reduce the switching frequencies of the upper bridge arm switching transistors and the lower bridge arm switching transistors of the three switching bridge arms.

With reference to the first aspect, in a possible implementation, the control apparatus is configured to output the second control signal in response to that the temperature of the motor control unit is less than the preset temperature and the rotational speed of the motor is greater than or equal to the first preset rotational speed. In response to that the temperature of the motor control unit is greater than or equal to the preset temperature and the rotational speed of the motor is greater than or equal to the second preset rotational speed, the control apparatus outputs the first control signal, and reduces the switching frequencies of the upper bridge arm switching transistors and the lower bridge arm switching transistors of the three switching bridge arms.

Based on the temperature of the motor control unit and the rotational speed of the motor, the control apparatus of the motor control unit provided in this embodiment of this application increases the quantity of segments of sending the control signal, and reduces the switching frequency of the switching transistor, to reduce the heat generated by the motor control unit and the possibility that the powertrain resonates with the PWM carrier, so as to reduce the temperature rise of the motor control unit, and improve the NVH performance of the powertrain.

According to a second aspect, this application provides a powertrain, where the powertrain includes a motor control unit and a motor, the motor control unit includes a control apparatus and three switching bridge arms, two ends of each switching bridge arm are configured to receive an input voltage of the motor control unit, each switching bridge arm includes an upper bridge arm switching transistor and a lower bridge arm switching transistor, bridge arm midpoints of the three switching bridge arms are respectively configured to output three phases of alternating currents to three phases of windings of the motor, and the control apparatus is configured to: based on at least one of a result of comparison between a rotational speed of the motor and a preset rotational speed and a result of comparison between a temperature of the motor control unit and a preset temperature, adjust switching frequencies of the upper bridge arm switching transistors and the lower bridge arm switching transistors of the three switching bridge arms, and/or switch a type of a control signal. The control apparatus is configured to output at least two types of control signals, to control the upper bridge arm switching transistors and the lower bridge arm switching transistors of the three switching bridge arms. The at least two types of control signals include a first control signal and a second control signal. A quantity of segments of sending the first control signal is greater than a quantity of segments of sending the second control signal. The preset rotational speed includes a first preset rotational speed and a second preset rotational speed, and the second preset rotational speed is greater than the first preset rotational speed.

According to a third aspect, this application provides an electric vehicle, where the electric vehicle includes the control apparatus provided in any one of the possible implementations of the first aspect, or the powertrain provided in any one of the possible implementations of the second aspect.

In addition, for beneficial effect of the second aspect and the third aspect, refer to descriptions of beneficial effect corresponding to the first aspect. Details are not described herein again.

### BRIEF DESCRIPTION OF DRAWINGS

FIG. 1 is a diagram of a structure of a powertrain according to this application;
FIG. 2 is a diagram of a structure of a motor control unit according to this application;
FIG. 3 is a diagram of a spatial location of each voltage vector;
FIG. 4 is a diagram of a seven-segment PWM waveform;
FIG. 5 is a diagram of a five-segment PWM waveform; and
FIG. 6 is a diagram of an operating range of a powertrain or a motor according to this application.

### DESCRIPTION OF REFERENCE SIGNS OF MAIN ELEMENTS

powertrain 10;
motor control unit 11;
motor 12;
bridge arm circuit 111;
first switching bridge arm S1;
second switching bridge arm S2;
third switching bridge arm S3;
first upper bridge arm switching transistor S1_A;
first lower bridge arm switching transistor S1_B;
second upper bridge arm switching transistor S2_A;
second lower bridge arm switching transistor S2_B;
third upper bridge arm switching transistor S3_A;
third lower bridge arm switching transistor S3_B;
diode D0;
control apparatus 112; and
capacitor C1.

In the following specific implementations, this application is further described with reference to accompanying drawings.

### DESCRIPTION OF EMBODIMENTS

The following clearly describes the technical solutions in embodiments of this application with reference to accompanying drawings in embodiments of this application.

It may be understood that a connection relationship described in this application is a direct or indirect connection. For example, that A is connected to B may be that A is directly connected to B, or may be that A is indirectly connected to B through one or more other electrical components. For example, A may be directly connected to C, and C may be directly connected to B, so that A and B are connected through C. It may be further understood that "A is connected to B" described in this application may be that A is directly connected to B, or may be that A is indirectly connected to B through one or more other electrical components.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists.

In the descriptions of this application, words such as "first" and "second" are merely used to distinguish between different objects, and do not limit quantities and execution sequences. In addition, the words such as "first" and "second" do not indicate a definite difference. In addition, terms such as "include" and "have" and any variants thereof are intended to cover a non-exclusive inclusion.

The technical solutions of this application are further described below in detail with reference to accompanying drawings.

With development of electric vehicles, powertrains (Powertrain) are used increasingly widely. The powertrain of the electric vehicle generally includes a motor and a motor control unit. The motor control unit usually controls turn-on or turn-off of a plurality of power switching transistors based on a pulse width modulation (Pulse Width Modulation, PWM) signal.

Turn-on and turn-off of the plurality of power switching transistors in the motor control unit cause a temperature rise of the motor control unit. Correspondingly, the motor control unit needs to reduce a frequency of the PWM signal, to reduce turn-on and turn-off frequencies of the power switching transistor, reduce heat generated by the power switching transistor, and avoid an excessively high temperature of the motor control unit. However, when the frequency of the PWM signal is reduced, a carrier of the PWM signal may resonate with an element in the powertrain, resulting in carrier noise that deteriorates noise, vibration, and harshness (Noise, Vibration, Harshness, NVH) performance of the powertrain.

In addition, an increase in a quantity of segments of sending the PWM signal also causes the temperature rise of the motor control unit. Correspondingly, the motor control unit needs to reduce the quantity of segments of sending the PWM signal, to reduce the heat generated by the power switching transistor, and avoid the excessively high temperature of the motor control unit. However, when the quantity of segments of sending the PWM signal is reduced, the carrier of the PWM signal may resonate with the element in the powertrain, resulting in the carrier noise that deteriorates the NVH performance of the powertrain.

Therefore, this application provides a motor control unit and a powertrain, to adjust a mode of sending a PWM signal and a switching frequency of a power switching transistor based on a temperature and/or a rotational speed of a motor, so as to reduce heat generated by the power switching transistor, and optimize NVH performance of the powertrain.

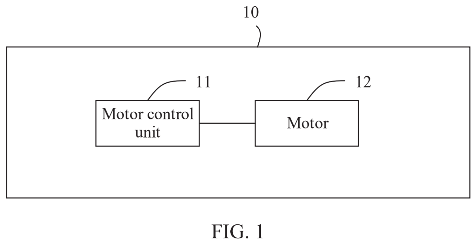

FIG. 1 is a diagram of a structure of a powertrain 10 according to this application. The powertrain 10 includes a motor control unit 11 and a motor 12. The motor control unit 11 is configured to control a running status of the motor 12. For example, the motor control unit 11 receives a direct current and outputs an alternating current to the motor 12, and the motor control unit 11 controls the running status including a rotational speed, torque, a temperature, and the like of the motor 12 by adjusting the output alternating current.

In this embodiment of this application, the motor control unit includes a control apparatus and three switching bridge arms. Two ends of each switching bridge arm are configured to receive an input voltage of the motor control unit. Each switching bridge arm includes an upper bridge arm switching transistor and a lower bridge arm switching transistor. Bridge arm midpoints of the three switching bridge arms are respectively configured to output three phases of alternating currents to three phases of windings of the motor. The control apparatus is configured to output at least two types of control signals, to control the upper bridge arm switching transistors and the lower bridge arm switching transistors of the three switching bridge arms. In addition, the control apparatus is configured to: based on at least one of a rotational speed of a motor and a temperature of the motor control unit, adjust switching frequencies of the upper bridge arm switching transistors and the lower bridge arm switching transistors of the three switching bridge arms, and/or switch a type of the control signal.

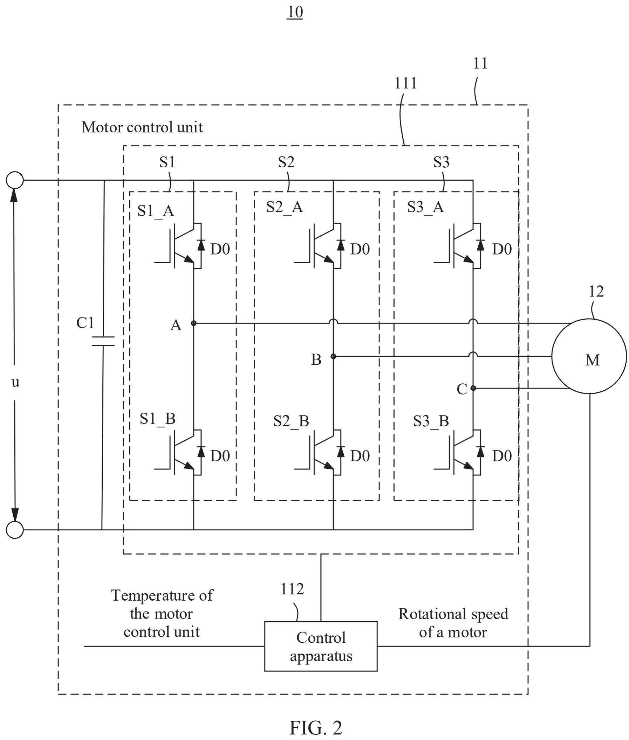

FIG. 2 is a diagram of a structure of the motor control unit 11 according to this application. For example, the motor control unit 11 includes a bridge arm circuit 111 and a control apparatus 112. The bridge arm circuit 111 receives an input voltage of the motor control unit 11 through a positive electrode and a negative electrode of a bus. In this embodiment of this application, the bridge arm circuit 111 of the motor control unit 11 includes three switching bridge arms. Each switching bridge arm receives the input voltage of the motor control unit 11 through the positive electrode and the negative electrode of the bus. Specifically, each switching bridge arm includes an upper bridge arm switching transistor and a lower bridge arm switching transistor. The three switching bridge arms are connected in parallel between the positive electrode and the negative electrode of the bus. The upper bridge arm switching transistor and the lower bridge arm switching transistor in each switching bridge arm are connected in series between the positive electrode and the negative electrode of the bus. A point of connection between the upper bridge arm switching transistor and the lower bridge arm switching transistor in each switching bridge arm is a bridge arm midpoint of the switching bridge arm, and each switching bridge arm outputs one corresponding phase alternating current through the bridge arm midpoint.

For example, the bridge arm circuit 111 of the motor control unit 11 includes a first switching bridge arm S1, a second switching bridge arm S2, and a third switching bridge arm S3. Two ends of each of the first switching bridge arm S1, the second switching bridge arm S2, and the third switching bridge arm S3 are respectively connected to the positive electrode and the negative electrode of the bus. Bridge arm midpoints of the first switching bridge arm S1, the second switching bridge arm S2, and the third switching bridge arm S3 are respectively connected to three phases of windings of the motor 12. The bridge arm midpoints of the first switching bridge arm S1, the second switching bridge arm S2, and the third switching bridge arm S3 each output one phase alternating current.

In an embodiment, the motor control unit 11 further includes a capacitor C1. The capacitor C1 is electrically connected between the positive electrode and the negative electrode of the bus. The capacitor C1 is configured to stabilize the input voltage of the motor control unit 11.

In an embodiment, upper bridge arm switching transistors and lower bridge arm switching transistors of the first switching bridge arm S1, the second switching bridge arm S2, and the third switching bridge arm S3 are metal oxide semiconductor (metal oxide semiconductor, MOS) transistors. Each upper bridge arm switching transistor or lower bridge arm switching transistor includes a freewheeling diode D0. The freewheeling diode D0 serving as a freewheeling channel of a load current can prevent the switching transistor from being damaged.

Specifically, the first switching bridge arm S1 includes a first upper bridge arm switching transistor S1_A and a first lower bridge arm switching transistor S1_B. A drain of the first upper bridge arm switching transistor S1_A is electrically connected to one end of the capacitor C1 and one electrode of the bus, a source of the first lower bridge arm switching transistor S1_B is electrically connected to the other end of the capacitor C1 and the other electrode of the bus, and a source of the first upper bridge arm S1_A is electrically connected to a drain of the first lower bridge arm switching transistor S1_B and is used as a first bridge arm midpoint A of the first switching bridge arm S1. The first switching bridge arm S1 is configured to output a first phase alternating current through the first bridge arm midpoint A.

Specifically, the second switching bridge arm S2 includes a second upper bridge arm switching transistor S2_A and a second lower bridge arm switching transistor S2_B. A drain of the second upper bridge arm switching transistor S2_A is electrically connected to one end of the capacitor C1 and one electrode of the bus, a source of the second lower bridge arm switching transistor S2_B is electrically connected to the other end of the capacitor C1 and the other electrode of the bus, and a source of the second upper bridge arm S2_A is electrically connected to a drain of the second lower bridge arm switching transistor S2_B and is used as a first bridge arm midpoint B of the second switching bridge arm S2. The second bridge arm midpoint B is configured to output a second phase alternating current.

Specifically, the third switching bridge arm S3 includes a third upper bridge arm switching transistor S3_A and a third lower bridge arm switching transistor S3_B. A drain of the third upper bridge arm switching transistor S3_A is electrically connected to one end of the capacitor C1 and one electrode of the bus, a source of the third lower bridge arm switching transistor S3_B is electrically connected to the other end of the capacitor C1 and the other electrode of the bus, and a source of the first upper bridge arm S3_A is electrically connected to a drain of the first lower bridge arm switching transistor S3_B and is used as a first bridge arm midpoint C of the first switching bridge arm S3. The third bridge arm midpoint C is configured to output a third phase alternating current.

The control apparatus 112 is configured to output a control signal to control the upper bridge arm switching transistor and the lower bridge arm switching transistor in each switching bridge arm in the bridge arm circuit 111. Specifically, the control apparatus 112 is configured to control turn-on or turn-off of the upper bridge arm switching transistor and the lower bridge arm switching transistor.

In an embodiment, the control apparatus 112 outputs a pulse width modulation (pulse width modulation, PWM) signal to control the upper bridge arm switching transistor and the lower bridge arm switching transistor.

In an embodiment, the control apparatus 112 is configured to adjust an output frequency or a duty cycle of the PWM signal. It may be understood that the control apparatus 112 adjusts the duty cycle of the PWM signal, to adjust a three-phase current output by the bridge arm circuit 111. The control apparatus 112 adjusts the output frequency of the PWM signal, to adjust the switching frequencies of the upper bridge arm switching transistor and the lower bridge arm switching transistor, so as to adjust the three-phase current output by the bridge arm circuit 111.

For example, the control apparatus 112 is electrically connected to the upper bridge arm switching transistors and the lower bridge arm switching transistors of the first switching bridge arm S1, the second switching bridge arm S2, and the third switching bridge arm S3 in the bridge arm circuit 111.

Specifically, the control apparatus 112 is electrically connected to gates of the upper bridge arm switching transistors and the lower bridge arm switching transistors of the first switching bridge arm S1, the second switching bridge arm S2, and the third switching bridge arm S3 in the bridge arm circuit 111.

It may be understood that the upper bridge arm switching transistor and the lower bridge arm switching transistor in each switching bridge arm in the bridge arm circuit 111 are complementarily turned on. For example, when the upper bridge arm switching transistor is turned on, the lower bridge arm switching transistor is turned off; or when the lower bridge arm switching transistor is turned on, the upper bridge arm switching transistor is turned off. For example, that an upper bridge arm switching transistor of one switching bridge arm is turned on and a lower bridge arm switching transistor of the one switching bridge arm is turned off is a state 1, and that an upper bridge arm switching transistor of one switching bridge arm is turned off and a lower bridge arm switching transistor of the one switching bridge arm is turned on is a state 0. The switching transistors of the three bridge arms form eight different voltage vectors that include six effective voltage vectors (V1 (001), V2 (010), V3 (011), V4 (100), V5 (101), and V6 (110)) and two zero vectors (V0 (000) and V7 (111)).

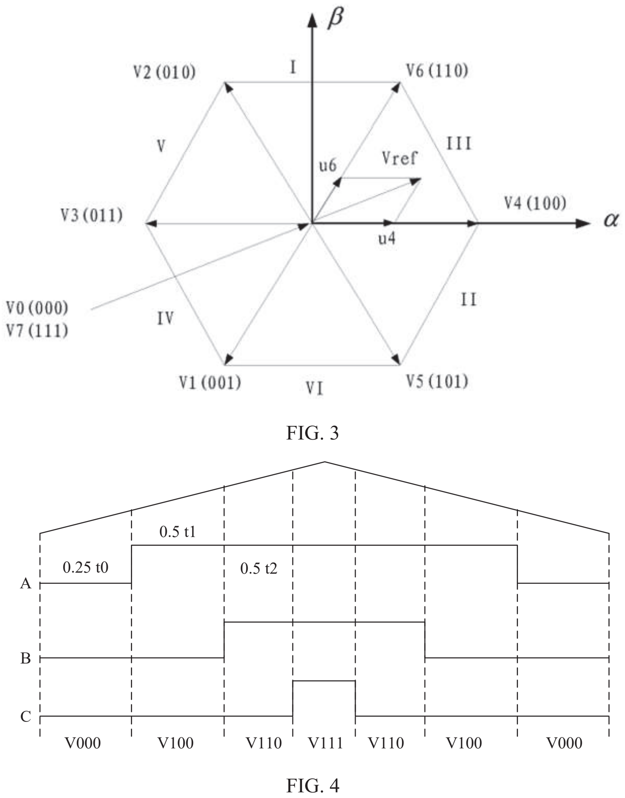

FIG. 3 shows a spatial location of each voltage vector. For example, when a reference voltage vector Vref falls within a sector III, the reference voltage vector Vref includes the two adjacent effective voltage vectors V4 (100) and V6 (110) and the zero vector V0 (000)/V7 (111). A reference voltage vector falls within another sector is calculated in a similar manner, and details are not described herein again.

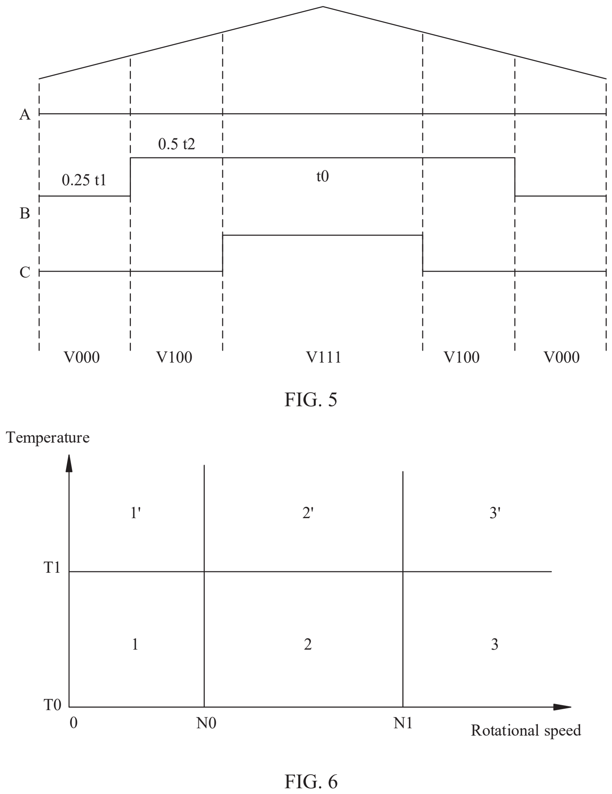

An action time of each of the two effective voltage vectors adjacent to the reference voltage vector and the zero vector may be calculated based on a volt-second balance principle, and a seven-segment PWM waveform shown in FIG. 4 or a five-segment PWM waveform shown in FIG. 5 may be obtained. The reference voltage vector is a voltage vector acting on a specific sector at a specific moment. Based on a principle of mean equivalence, the reference voltage vector may be equivalent to the two non-zero basic vectors adjacent to the reference voltage vector and the zero vector.

In FIG. 4 and FIG. 5, t0 represents an action time of the zero vector, t1 represents an action time of one effective voltage vector adjacent to the reference voltage vector, t2 represents an action time of the other effective voltage vector adjacent to the reference voltage vector, and A/B/C represents a three-phase output that corresponds to A/B/C in FIG. 2.

In some embodiments, the PWM signal may include a space vector pulse width modulation (space vector pulse width modulation, SVPWM) signal, a differential pulse width modulation (differential pulse width modulation, DPWM) signal, a sinusoidal pulse width modulation (sinusoidal pulse width modulation, SPWM) signal, and the like.

In this embodiment of this application, the control apparatus 112 is configured to output at least two types of control signals, to control the upper bridge arm switching transistors and the lower bridge arm switching transistors of the three switching bridge arms. Two types of control signals include a first control signal and a second control signal. A quantity of segments of sending the first control signal is greater than a quantity of segments of sending the second control signal. For example, the first control signal may be a seven-segment PWM signal, and the second control signal may be a five-segment PWM signal.

In this embodiment of this application, the control apparatus 112 is configured to: based on at least one of a rotational speed of the motor 12 and a temperature of the motor control unit 11, adjust switching frequencies of the upper bridge arm switching transistors and the lower bridge arm switching transistors of the three switching bridge arms, and/or switch a type of the control signal.

It may be understood that higher switching frequencies of the upper bridge arm switching transistors and the lower bridge arm switching transistors of the three switching bridge arms in the bridge arm circuit 111 indicate a higher temperature of the motor control unit 11. In addition, the higher switching frequencies of the upper bridge arm switching transistors and the lower bridge arm switching transistors of the three switching bridge arms in the bridge arm circuit 111 indicate a higher frequency of the PWM signal and a lower probability that a carrier of the PWM signal resonates with an element in the powertrain, so that carrier noise is less, and NVH performance of the powertrain 10 is better.

It may be understood that a larger quantity of segments of sending the control signal output by the control apparatus 112 indicates a higher temperature rise of the motor control unit 11. In addition, the larger quantity of segments of sending the control signal output by the control apparatus 112 indicates the lower probability that the carrier of the PWM signal resonates with the element in the powertrain, so that the carrier noise is less, and the NVH performance of the powertrain 10 is better.

Therefore, according to the motor control unit 11 and the control apparatus 112 of the motor control unit 11 provided in embodiments of this application, a balance between thermal stress and the NVH performance of the powertrain 10 can be achieved, and performance of the powertrain 10 can be improved.

In this embodiment of this application, the temperature of the motor control unit 11 is a temperature of one upper bridge arm or upper bridge arm switching transistor in the bridge arm circuit 111, or the temperature of the motor control unit 11 is a highest temperature or an average temperature of a plurality of upper bridge arms and/or upper bridge arm switching transistors in the bridge arm circuit 111. In this embodiment of this application, a temperature of a bridge arm switching transistor in the bridge arm circuit 111 may be measured through a temperature sensor. The temperature sensor is configured to measure the temperature of the bridge arm switching transistor in the bridge arm circuit 111 and output the temperature to the control apparatus 112.

In this embodiment of this application, the rotational speed of the motor 12 may be measured through a rotational speed sensor. The rotational speed sensor is configured to measure the rotational speed of the motor 12 and output the rotational speed to the control apparatus 112.

In an implementation, the control apparatus 112 is configured to adjust the switching frequencies of the upper bridge arm switching transistors and the lower bridge arm switching transistors of the three switching bridge arms based on the temperature of the motor control unit 11. For example, the control apparatus 112 may reduce the switching frequencies of the upper bridge arm switching transistors and the lower bridge arm switching transistors of the three switching bridge arms in response to that the temperature of the motor control unit 11 is greater than or equal to a preset temperature.

It may be understood that the control apparatus 112 provided in this embodiment of this application adjusts the switching frequencies of the upper bridge arm switching transistors and the lower bridge arm switching transistors of the three switching bridge arms based on the temperature of the motor control unit 11, to reduce the temperature rise of the motor control unit 11, and further improve the performance of the powertrain 10.

In an implementation, the control apparatus 112 may adjust the switching frequencies of the upper bridge arm switching transistors and the lower bridge arm switching transistors of the three switching bridge arms based on the rotational speed of the motor 12. For example, the control apparatus 112 increases the switching frequencies of the upper bridge arm switching transistors and the lower bridge arm switching transistors of the three switching bridge arms in response to that the rotational speed of the motor 12 is greater than or equal to a first preset rotational speed. For another example, the control apparatus 112 may reduce the switching frequencies of the upper bridge arm switching transistors and the lower bridge arm switching transistors of the three switching bridge arms in response to that the rotational speed of the motor 12 is greater than or equal to a second preset rotational speed, where the second preset rotational speed is greater than the first preset rotational speed.

In an embodiment, the first preset rotational speed and the second preset rotational speed respectively represent different rotational speed values. In this embodiment of this application, the first preset rotational speed and the second preset rotational speed may be set based on a specific operating status of the motor 12. In an embodiment, the first preset rotational speed and the second preset rotational speed respectively represent different rotational speed ranges. A rotational speed range represented by the first preset rotational speed and a rotational speed range represented by the second preset rotational speed do not overlap, and a maximum value of the rotational speed range represented by the first preset rotational speed is less than a minimum value of the rotational speed range represented by the second preset rotational speed.

It may be understood that, the control apparatus 112 provided in this embodiment of this application adjusts the switching frequencies of the upper bridge arm switching transistors and the lower bridge arm switching transistors of the three switching bridge arms based on the rotational speed of the motor 12. Therefore, when the motor 12 is in a low rotational speed range, the switching frequencies of the upper bridge arm switching transistors and the lower bridge arm switching transistors of the three switching bridge arms may be increased, so that the possibility that the carrier of the PWM signal resonates with the element in the powertrain is reduced, the carrier noise is reduced, the NVH performance of the powertrain 10 is improved. In addition, when the motor 12 runs within a high rotational speed range, the switching frequencies of the upper bridge arm switching transistors and the lower bridge arm switching transistors of the three switching bridge arms may be reduced, to reduce the temperature rise of the motor control unit 11, and further improve the performance of the powertrain 10.

In an implementation, the control apparatus 112 is configured to switch the type of the control signal based on the rotational speed of the motor 12. For example, the control apparatus 112 is configured to output a first control signal in response to that the rotational speed of the motor 12 is less than the first preset rotational speed. For another example, the control apparatus 112 is configured to output a second control signal in response to that the rotational speed of the motor 12 is greater than or equal to the first preset rotational speed. For another example, the control apparatus 112 may output a first control signal in response to that the rotational speed of the motor 12 is greater than or equal to the second preset rotational speed.

It may be understood that, the control apparatus 112 provided in this embodiment of this application switches the type of the control signal based on the rotational speed of the motor 12. Therefore, according to a first aspect, when the rotational speed of the motor 12 is less than the first preset rotational speed, a control signal with a large quantity of segments of sending the control signal may be used, so that the possibility that the carrier of the PWM signal resonates with the element in the powertrain is lower, the carrier noise is less, and the NVH performance of the powertrain 10 is better. According to a second aspect, when the motor 12 runs between the first preset rotational speed and the second preset rotational speed, the control signal may be switched into a control signal with a small quantity of segments of sending the control signal, to reduce the temperature rise of the motor control unit 11, and improve the performance of the powertrain 10. According to a third aspect, when the motor 12 continues to run at a speed greater than or equal to the second preset rotational speed, the control signal may be switched into a control signal with a large quantity of segments of sending the control signal, to reduce the carrier noise, and improve the NVH performance of the powertrain 10.

In an implementation, the control apparatus 112 is configured to switch the type of the control signal based on the temperature of the motor control unit 11 and the rotational speed of the motor 12. For example, the control apparatus 112 is configured to output a second control signal in response to that the temperature of the motor control unit 11 is less than the preset temperature and the rotational speed of the motor 12 is greater than or equal to the first preset rotational speed.

It may be understood that, the control apparatus 112 provided in this embodiment of this application switches the type of the control signal based on the rotational speed of the motor 12 and the temperature of the motor control unit 11. Therefore, when the motor 12 runs at a low temperature and within a low rotational speed range, a control signal with a large quantity of segments of sending the control signal may be used, so that the possibility that the carrier of the PWM signal resonates with the element in the powertrain is lower, the carrier noise is less, and the NVH performance of the powertrain 10 is better.

In an implementation, the control apparatus 112 is configured to: based on the temperature of the motor control unit 11 and the rotational speed of the motor 12, switch the type of the control signal, and adjust the switching frequencies of the upper bridge arm switching transistors and the lower bridge arm switching transistors of the three switching bridge arms. For example, the control apparatus 112 is configured to: in response to that the temperature of the motor control unit 11 is greater than or equal to the preset temperature and the rotational speed of the motor is less than the first preset rotational speed, output a first control signal, and reduce the switching frequencies of the upper bridge arm switching transistors and the lower bridge arm switching transistors of the three switching bridge arms. For another example, the control apparatus 112 is configured to: in response to that the temperature of the motor control unit 11 is greater than or equal to the preset temperature and the rotational speed of the motor 12 is greater than or equal to the second preset rotational speed, output a first control signal, and reduce the switching frequencies of the upper bridge arm switching transistors and the lower bridge arm switching transistors of the three switching bridge arms.

It may be understood that, based on the rotational speed of the motor 12 and the temperature of the motor control unit 11, the control apparatus 112 provided in this embodiment of this application switches the type of the control signal, and adjusts the switching frequencies of the upper bridge arm switching transistors and the lower bridge arm switching transistors of the three switching bridge arms. Therefore, when the motor 12 runs at a high temperature and at a speed less than the first preset rotational speed, or when the motor 12 runs at a high temperature and at a speed greater than or equal to the second preset rotational speed, a control signal with a large quantity of segments of sending the control signal may be used, and the switching frequencies of the upper bridge arm switching transistors and the lower bridge arm switching transistors of the three switching bridge arms may be reduced, to effectively reduce the temperature rise of the motor control unit 11, and further improve the performance of the powertrain 10.

Based on at least one of the rotational speed of the motor and the temperature of the motor control unit, the motor control unit 11 and the control apparatus 112 of the motor control unit 11 provided in this embodiment of this application adjust the switching frequencies of the upper bridge arm switching transistors and the lower bridge arm switching transistors of the three switching bridge arms, and/or switch the type of the control signal, so that the balance between the thermal stress and the NVH performance of the powertrain 10 can be optimized, costs of a power device are not increased, and output power and output torque of the powertrain 10 are not lost.

In this embodiment of this application, an operating range of the motor 12 may be divided into a plurality of operating ranges based on a change in the temperature of the motor control unit 11 and a change in the rotational speed of the motor 12. For example, when the temperature of the motor control unit 11 is less than the preset temperature T1, and the rotational speed of the motor 12 is less than the first preset rotational speed N0, the motor 12 runs within an operating range 1. When the rotational speed of the motor 12 is greater than the first preset rotational speed N0 and less than the second preset rotational speed N1, and the temperature of the motor control unit 11 is less than the preset temperature T1, the motor 12 runs within an operating range 2. When the rotational speed of the motor 12 is greater than the first preset rotational speed N0 and less than the second preset rotational speed N1, and the temperature of the motor control unit 11 is greater than or equal to the preset temperature T1, the motor 12 runs within an operating range 2'. When the rotational speed of the motor 12 is greater than or equal to the second preset rotational speed N1, and the temperature of the motor control unit 11 is greater than or equal to the preset temperature T1, the motor 12 runs within an operating range 3'.

In this embodiment of this application, an operating range of the powertrain 10 may be divided into a plurality of operating ranges based on a change in the temperature of the motor control unit 11 and a change in the rotational speed of the motor 12. It may be understood that a division manner for the plurality of operating ranges of the powertrain 10 is the same as a division manner for the plurality of operating ranges of the motor 12. Details are not described again.

FIG. 6 is a diagram of an operating range of a powertrain or a motor according to an embodiment of this application. The following uses the motor 12 as an example to describe a detailed running process with reference to FIG. 6.

The motor 12 starts to run, the rotational speed of the motor 12 gradually increases, and the temperature of the motor control unit 11 also gradually rises. In this case, the motor 12 runs within the range 1, and the control apparatus 112 outputs the first control signal.

It may be understood that, the motor 12 runs within the operating range 1, and the motor control unit 11 outputs the first control signal, so that the temperature rise of the motor control unit 11 is small, and the possibility of the resonance of the powertrain 10 is reduced, to improve the NVH performance of the powertrain 10, and achieve the balance between the thermal stress and the NVH performance of the powertrain 10.

As the motor 12 runs, the rotational speed of the motor 12 continues to increase, and the temperature of the motor control unit 11 continues to rise. In an embodiment, the rotational speed of the motor 12 increases to be greater than the first preset rotational speed N0 and less than the second preset rotational speed N1, and the temperature of the motor control unit 11 continues to rise but is less than the preset temperature T1. Correspondingly, the motor 12 is switched from the operating range 1 to the operating range 2.

The motor 12 runs within the range 2, and the control apparatus 112 increases the switching frequencies of the upper bridge arm switching transistors and the lower bridge arm switching transistors of the three switching bridge arms, and/or outputs the second control signal.

It may be understood that, the operating range of the motor 12 is switched from the operating range 1 to the operating range 2, and the control apparatus 112 increases the switching frequencies of the upper bridge arm switching transistors and the lower bridge arm switching transistors of the three switching bridge arms, to improve the NVH performance of the powertrain 10, and/or reduces the quantity of segments of sending the control signal, to reduce the temperature rise of the motor control unit 11, so as to achieve the balance between the thermal stress and the NVH performance of the powertrain 10.

As the motor 12 continues to run, the rotational speed of the motor 12 continues to increase, but the rotational speed of the motor 12 is still greater than the first preset rotational speed N0 and less than the second preset rotational speed N1, and the temperature of the motor control unit 11 rises to be greater than or equal to the preset temperature T1. Correspondingly, the operating range of the motor 12 is switched from the operating range 2 to the operating range 2'.

The motor 12 runs within the range 2', and the control apparatus 112 reduces the switching frequencies of the upper bridge arm switching transistors and the lower bridge arm switching transistors of the three switching bridge arms.

It may be understood that, the operating range of the motor 12 is switched from the operating range 1 to the operating range 2, and the control apparatus 112 reduces the switching frequencies of the upper bridge arm switching transistors and the lower bridge arm switching transistors of the three switching bridge arms, to reduce the temperature rise of the motor control unit 12, so as to achieve the balance between the thermal stress and the NVH performance of the powertrain 10.

As the motor 12 continues to run, the rotational speed of the motor 12 continues to increase to be greater than or equal to the second preset rotational speed N1, and the temperature of the motor control unit 11 is also greater than or equal to the preset temperature T1. Correspondingly, the operating range of the motor 12 is switched from the operating range 2' to the operating range 3'.

The operating range of the motor 12 is switched from the operating range 2' to the operating range 3', and the control apparatus 112 reduces the switching frequencies of the upper bridge arm switching transistors and the lower bridge arm switching transistors of the three switching bridge arms, and/or outputs the first control signal.

It may be understood that, the operating range of the motor 12 is switched from the operating range 2' to the operating range 3', and the control apparatus 112 reduces the switching frequencies of the upper bridge arm switching transistors and the lower bridge arm switching transistors of the three switching bridge arms, to reduce the temperature rise of the motor control unit 12, and/or outputs the first control signal, to reduce the possibility of the resonance of the powertrain 10, so as to achieve the balance between the thermal stress and the NVH performance of the powertrain 10.

It may be understood that, the foregoing embodiment describes a running process in which the operating range of the motor 12 is gradually switched from the operating range 1 to the operating range 3'. However, a sequence, a start range, and an end range for switching the operating ranges of the motor 12 may change based on actual operation of the motor 12. Therefore, in the example in this embodiment of this application, the operating range 1 is not limited to the start range for switching the operating ranges of the motor 12, and the operating range 3' is not limited to the end range for switching the operating ranges of the motor 12.

For example, the operating range of the motor 12 may be switched from the operating range 2 or an operating range 3 that has a high rotational speed or a high temperature to the operating range 1. For another example, the motor 12 may be switched from the operating range 1 to the operating range 1', and then switched from the operating range 1' to the operating range 2'. For another example, the motor 12 may be switched from the operating range 2 to the operating range 3, and then switched from the operating range 3 to the operating range 3'.

It may be understood that, the motor control unit 11 and the control apparatus 112 of the motor control unit 11 provided in this embodiment of this application adjust, based on at least one of the rotational speed of the motor and the temperature of the motor control unit, the switching frequencies of the upper bridge arm switching transistors and the lower bridge arm switching transistors of the three switching bridge arms and the quantity of segments of sending the control signal, to balance the temperature rise of the motor control unit 11 and the NVH performance of the powertrain 10, and further improve the performance of the powertrain 10.

The powertrain 10 provided in embodiments of this application may be further used in an electric vehicle. Correspondingly, the electric vehicle provided in this application includes the powertrain 10. The powertrain 10 includes the motor control unit 11 and the motor 12. The motor control unit 11 includes the bridge arm circuit 111 and the control apparatus 112. Correspondingly, the control apparatus 112 is configured to: based on at least one of the rotational speed of the motor 12 and the temperature of the motor control unit 11, adjust the switching frequencies of the upper bridge arm switching transistors and the lower bridge arm switching transistors of the three switching bridge arms, and/or switch the type of the control signal.

It may be understood that, the control apparatus 112 of the motor control unit 11 in the powertrain 10 of the electric vehicle provided in embodiments of this application adjusts, based on at least one of the rotational speed of the motor and the temperature of the motor control unit, the switching frequencies of the upper bridge arm switching transistors and the lower bridge arm switching transistors of the three switching bridge arms in the bridge arm circuit 111 and the quantity of segments of sending the control signal, to balance the temperature rise of the motor control unit 11 and the thermal stress, and further improve the NVH performance of the powertrain 10. A person of ordinary skill in the art should understand that the foregoing implementations are merely intended to describe this application but are not intended to limit this application, provided that proper modifications and changes made to the foregoing embodiments within the essential scope of this application fall within the protection scope of the claims of this application.

## Claims

1. A motor control unit, wherein the motor control unit comprises a control apparatus and three switching bridge arms, two ends of each of the switching bridge arms are configured to receive an input voltage of the motor control unit, each of the switching bridge arms comprises an upper bridge arm switching transistor and a lower bridge arm switching transistor, bridge arm midpoints of the three switching bridge arms are respectively configured to output three phases of alternating currents to three phases of windings of a motor, and the control apparatus is configured to:
based on at least one of a result of comparison between a rotational speed of the motor and a preset rotational speed and a result of comparison between a temperature of the motor control unit and a preset temperature, adjust switching frequencies of the upper bridge arm switching transistors and the lower bridge arm switching transistors of the three switching bridge arms, and/or switch a type of a control signal, wherein
the preset rotational speed comprises a first preset rotational speed and a second preset rotational speed, and the second preset rotational speed is greater than the first preset rotational speed.

2. The motor control unit according to claim 1, wherein the control apparatus is configured to:
increase the switching frequencies of the upper bridge arm switching transistors and the lower bridge arm switching transistors of the three switching bridge arms in response to that the rotational speed of the motor is greater than or equal to the first preset rotational speed.

3. The motor control unit according to either claim 1 or claim 2, wherein the control apparatus is configured to:
reduce the switching frequencies of the upper bridge arm switching transistors and the lower bridge arm switching transistors of the three switching bridge arms in response to that the rotational speed of the motor is greater than or equal to the second preset rotational speed.

4. The motor control unit according to any one of claims 1 to 3, wherein the control apparatus is configured to:
reduce the switching frequencies of the upper bridge arm switching transistors and the lower bridge arm switching transistors of the three switching bridge arms in response to that the temperature of the motor control unit is greater than or equal to the preset temperature.

5. The motor control unit according to any one of claims 1 to 4, wherein the control apparatus is configured to output at least two types of control signals, to control the upper bridge arm switching transistors and the lower bridge arm switching transistors of the three switching bridge arms, wherein the at least two types of control signals comprise a first control signal and a second control signal, and a quantity of segments of sending the first control signal is greater than a quantity of segments of sending the second control signal; and the control apparatus is configured to:
output the first control signal in response to that the rotational speed of the motor is less than the first preset rotational speed; or
output the second control signal in response to that the rotational speed of the motor is greater than or equal to the first preset rotational speed.

6. The motor control unit according to claim 5, wherein the control apparatus is configured to:
output the first control signal in response to that the rotational speed of the motor is greater than or equal to the second preset rotational speed.

7. The motor control unit according to either claim 5 or claim 6, wherein the control apparatus is configured to:
in response to that the temperature of the motor control unit is greater than or equal to the preset temperature and the rotational speed of the motor is less than the first preset rotational speed, output the first control signal, and reduce the switching frequencies of the upper bridge arm switching transistors and the lower bridge arm switching transistors of the three switching bridge arms.

8. The motor control unit according to any one of claims 5 to 7, wherein the control apparatus is configured to:
output the second control signal in response to that the temperature of the motor control unit is less than the preset temperature and the rotational speed of the motor is greater than or equal to the first preset rotational speed; or
in response to that the temperature of the motor control unit is greater than or equal to the preset temperature and the rotational speed of the motor is greater than or equal to the second preset rotational speed, output the first control signal, and reduce the switching frequencies of the upper bridge arm switching transistors and the lower bridge arm switching transistors of the three switching bridge arms.

9. A powertrain, wherein the powertrain comprises a motor control unit and a motor, the motor control unit comprises a control apparatus and three switching bridge arms, two ends of each of the switching bridge arms are configured to receive an input voltage of the motor control unit, each of the switching bridge arms comprises an upper bridge arm switching transistor and a lower bridge arm switching transistor, bridge arm midpoints of the three switching bridge arms are respectively configured to output three phases of alternating currents to three phases of windings of the motor, and the control apparatus is configured to:
based on at least one of a result of comparison between a rotational speed of the motor and a preset rotational speed and a result of comparison between a temperature of the motor control unit and a preset temperature, adjust switching frequencies of the upper bridge arm switching transistors and the lower bridge arm switching transistors of the three switching bridge arms, and/or switch a type of the control signal, wherein
the preset rotational speed comprises a first preset rotational speed and a second preset rotational speed, and the second preset rotational speed is greater than the first preset rotational speed.

10. An electric vehicle, wherein the electric vehicle comprises the motor control unit according to any one of claims 1 to 8 or the powertrain according to claim 9.
